# EUROPEAN PATENT SPECIFICATION

(11) **EP 1 513 414 B1**
(45) Date of publication and mention of the grant of the patent: **08.03.2006**
(21) Application number: 03741643.5
(22) Date of filing: 16.06.2003
(51) Int. Cl.: A23G 3/20, A23G 3/02, B26D 7/06, A23G 3/12, A23P 1/00, A23L 1/31, A21C 11/10, A22C 7/00, A23N 17/00, A23G 7/00

(54) **DEVICE AND METHOD FOR FORMING A STRAND INTO INDIVIDUAL PIECES**
VORRICHTUNG UND VERFAHREN ZUM SCHNEIDEN VON GETRENNTEN FORMTEILEN AUS PRODUKTSTRÄNGEN
DISPOSITIF ET PROCEDE PERMETTANT DE COUPER UN BOUDIN EN PIECES INDIVIDUELLES

(30) Priority: 14.06.2002 NL 1020871
(43) Date of publication of application: 16.03.2005
(73) Proprietor: Perfetti van Melle Holding B.V., 4815 HK Breda (NL)
(72) Inventor: VAN GESTEL, Marko, Jacobus, Antonius, NL-4861 SJ Chaam (NL)
(74) Representative: van Westenbrugge, Andries
(86) International application number: PCT/NL2003/000439
(87) International publication number: WO 2003/105594

(56) References cited:
- EP-A- 0 359 393
- DE-C- 963 831
- US-A- 1 400 127
- US-A- 3 506 421
- US-A- 5 746 106
- PATENT ABSTRACTS OF JAPAN vol. 2002, no. 02, 2 April 2002 (2002-04-02) & JP 2001 286272 A (FE:KK), 16 October 2001 (2001-10-16)
- DATABASE WPI Section Ch, Week 197603 Derwent Publications Ltd., London, GB; Class D13, AN 1976-05027X XP002231161 -& SU 464 299 A (MOSC FOOD IND TECHN), 26 June 1975 (1975-06-26)

## Description

The present invention relates to a device for forming a strand into individual pieces. Such a device is disclosed in EP 0 359 303 A1 and consists of four rollers arranged horizontally. Two of the rollers are constructed as cutting rollers. A strand of material is co-extruded and fed vertically between the rollers and the strand is cut into pieces by movement of the rollers. Such a device is used, for example, for producing foods such as confectionery products.

Using this process it is possible to cut a strand of material supplied continuously into pieces. However, amongst other things when a co-extruded product is used the problem arises that the "outer skin" is cut through during cutting, as a result of which the individual part is no longer provided with the outer skin around the full outer periphery thereof and the "contents" of the strand become visible. In order to overcome this problem it is proposed to support the part to be cut downstream of the cutting rollers and to carry out the cutting operation in a controlled manner. This is achieved by giving the cutting rollers a spiral shape.

A device and method of this type are found inadequate if the core present within the outer skin consists of a relatively soft and/or warm material. Moreover, the maximum speed that can be achieved with such a construction is limited.

Moreover, it has been found that with such devices there is appreciable down time as a result of fouling.

US-A 5 746 106 discloses a device for providing pieces that have already been made into individual pieces with cuts on the surface. This is achieved by three rollers arranged at an angle provided with a cutting edge and a space for accommodating the product to be treated is delimited between the three cutting edges.

The aim of the present invention is to avoid the disadvantages of the device known. This aim is achieved with a device for separating a strand into pieces, in that said device comprises three rollers, each provided with a screw rib, which between them delimit a space for accommodating said strand and forming said pieces, wherein the cross-sectional area of said space is larger at the input end for said strand than the cross-sectional area of said space at the output end for said strand pieces, wherein one of said screw ribs is constructed as cutting rib and said rollers are provided with a rotary drive.

According to the present invention a funnel-shaped space is delimited between the (at least) three rollers. The inlet part of this funnel is sufficiently large to be able to receive the strand, whilst a cutting operation takes place at the outlet part of the funnel, as a result of which the strand is separated into the desired pieces. Consequently, it is no longer necessary to use high-frequency blades known from the state of the art for sealing. With such a device it is possible to work continuously. That is say, a strand of, in principle, infinite length is fed to the device according to the invention and cut into pieces. Consequently, the problem of various products over the length of the device as in the state of the art and the limited processing speed as a result of the batchwise treatment of the strands does not arise. Using the device according to the invention it is possible to produce large numbers of pieces. The various aspects are, of course, dependent on the product. With the device described above it can be guaranteed that every product is fed in in the same way and is subjected to the same treatment, as a result of which differences between the products are reduced. As a result of the space between the rollers becoming increasingly smaller, a strand is slowly converted into products having a shape corresponding to the shape of the screw ribs and the product formed in this way is finally separated from the strand. In this way a gradual transition into the individual pieces is provided during transport of the strand. By this means it is possible in the case of, for example, products having an outer skin and a relatively soft core, to provide gradual closing of the outer skin around the soft core. According to the invention it is important that the screw ribs extend over more than one revolution. More particularly, there must be at least three revolutions and according to a further advantageous embodiment there are at least ten revolutions of the screw ribs around one roller and more particularly each roller.

If, by way of example, a product is chosen that consists of a strand having a caramel outer layer filled with chocolate and where the pieces made have a diameter of approximately 2 cm, it is possible to produce up to 900 pieces per minute.

Of course, the various aspects are very highly dependent on the construction of the device.

The rollers described above each rotate about the longitudinal axis thereof. Because at least one of the rollers is provided with a screw or transport rib, transport of the strand will be provided by this means. Although it is possible to position the rollers essentially horizontally or with any other orientation, according to the invention it is preferable that the rollers are arranged essentially vertically. The funnel-shaped space can be delimited by increasing the core diameter of the rollers towards the outlet end. Preferably, this core diameter changes in accordance with a hyperboloid. This hyperboloid is preferably such that there is continuous linear contact between the roller concerned and the strand introduced. The same applies in respect of the external dimension of the screw ribs. The diameter of the latter also has to increase towards the output end. Stabilisation of the strand of material can be obtained by arranging the rollers at a slight angle with respect to one another instead of parallel to one another. Apart from the angle, the length of the rollers is also important. Here the angle is understood to be the shift in degrees of the centre of rotation of the roller from the inlet location to the outlet location. According to an advantageous embodiment of the invention, this angle is preferably between 0 and 90° and more particularly is between 60 and 90°. This angle can change depending on the product and the length of the rollers. The device can optionally be so constructed that this angle is adjustable. According to an advantageous embodiment of the invention, the length of the rollers is approximately 20 - 30 cm and more particularly approximately 27 cm.

So as as far as possible to prevent the strand from following the rotary movement of the rollers, the ribs can be treated in a particular way to restrict the frictional engagement and as far as possible to provide exclusively deformation of the strand material. Such measures can comprise making the ends of the ribs knurled or making said ends from, for example, Teflon material or the like.

Apart from rotation of the rollers individually, it is also possible to rotate the rollers as a set That is to say, according to an advantageous embodiment of the invention, the rollers are mounted on a support. This support can rotate in such a way that the (at least) three rollers rotate about the axis of the space delimited between them. Further optimisation of the separating operation can be provided by this means. With this arrangement the strand of material that has to be separated is introduced into the space delimited between the rollers without any rotation. Preferably, the speed of rotation of the support on which the rollers are positioned and the speed of rotation of the rollers themselves are so chosen that the total component on the surface of engagement between strand and rollers is zero. That is to say, the surface of the rollers engaging on the strand makes a rolling-away movement along the strand, as a result of which the strand does not tend to start to rotate as well, which would be the case if only the rollers were to turn and not the support on which the rollers have been mounted.

According to an advantageous embodiment of the invention, use is made of a single drive motor by means of which both the rollers individually and the supports in which the rollers are accommodated are driven.

The invention also relates to a method for forming a strand of material into individual pieces, comprising feeding said strand essentially vertically into a space delimited by three rotating rollers provided with a screw rib, wherein the (cross-sectional) area of said space delimited by said rollers decreases in the downward direction for forming said pieces and separating said strand into pieces by cutting said strand using the screw rib of at least one of said rollers.

As described above, such a device is particularly suitable for treating a wide variety of materials at high speed. Types of dough may be mentioned by way of example. One example of these is a caramel dough within which chocolate has been placed, the chocolate being at least partially in the liquid state. In this context it is important that the strand is separated into various pieces and the covering of caramel material extends over the entire surface, that is to say also at the location of the separation. That is to say, the covering must be pressed inwards during separation while the core of the product is still in a very soft state. Surprisingly, it has been found that such an operation is possible with the device according to the present invention. Thereafter, for further treatment the product will, for example, be subjected to a cooling step, for example by quenching in nitrogen. It must be understood that the present invention can also be used for strands without a fill and/or strands that have a greater strength.

The invention will be explained in more detail below with reference to an illustrative embodiment shown in the drawing.

In the drawing:
Fig. 1 shows a perspective view of three rollers according to the invention;
Fig. 2 shows, in cross-section, the device according to the invention where the rollers are not included in the drawing;
Fig. 3 shows a section at 90° with respect to that shown in Fig. 2;
Fig. 4 shows a plan view of the drive according to the invention;
Fig. 5 shows, diagrammatically, two rollers according to the present invention, and
Fig. 6 shows a further embodiment of the construction according to the present invention.

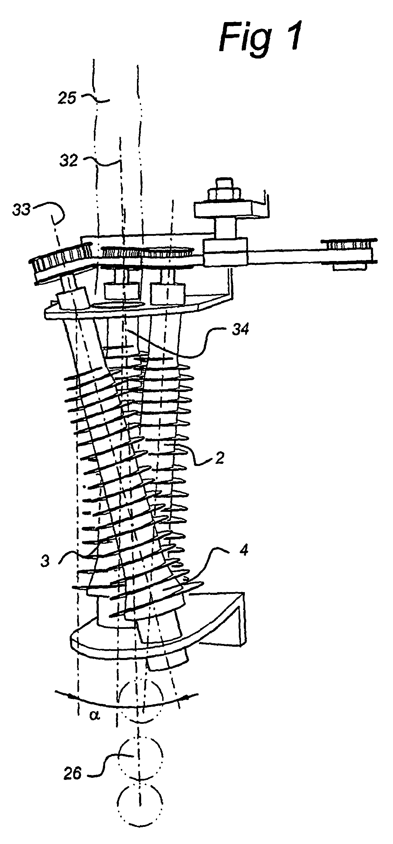

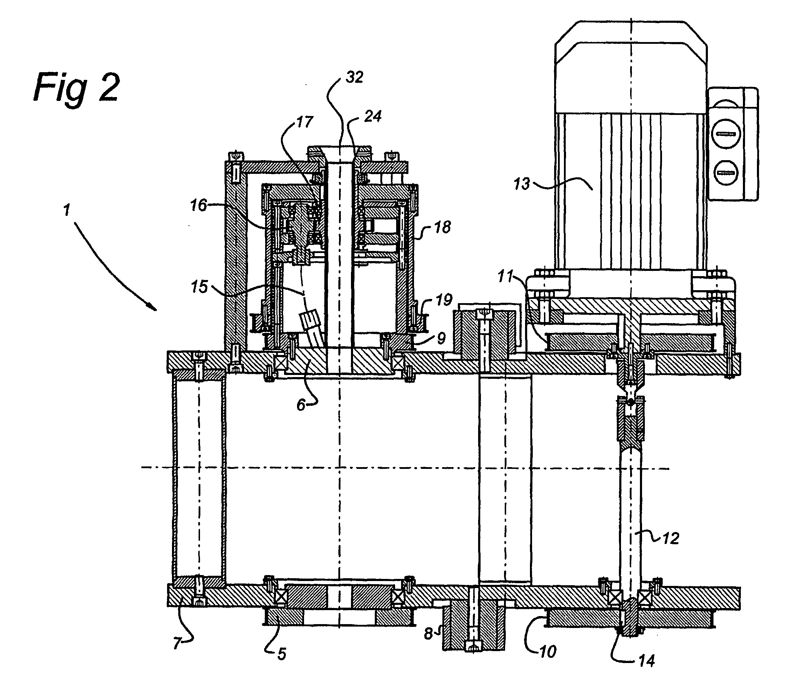

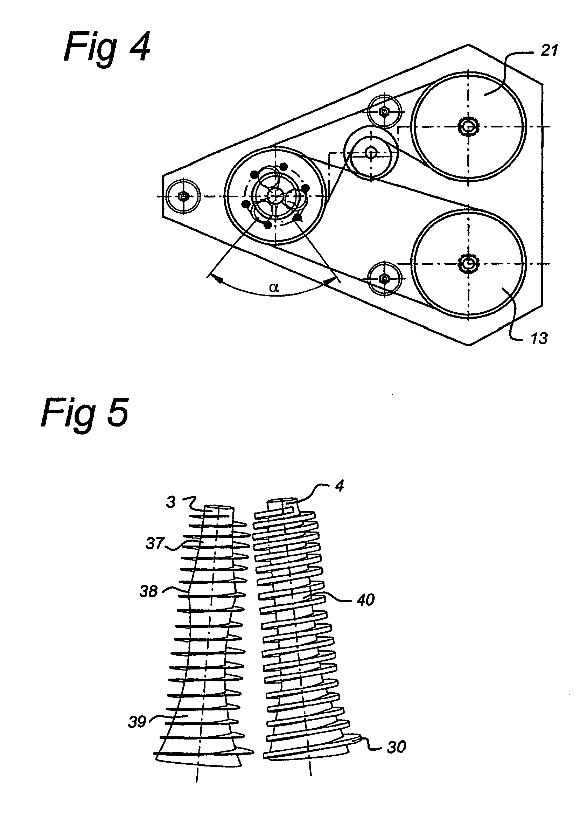

In Fig. 1 the rollers 2 - 4 according to the present invention placed in the device 1 (Fig. 2) are shown diagrammatically. The axis of roller 4 is indicated by 33. This axis intersects the top support plate 6 and the bottom support plate 5 (see Fig. 2 - 4). With respect to the central axis 32, there is a shift through an angle or arc α that is approximately 80°. The various aspects are, of course, dependent on the length of the rollers (approximately 27 cm here), the desired and processed product and further characteristics easily to be determined experimentally by a person skilled in the art. The rollers 2 and 3 are correspondingly arranged at a slope with respect to the central axis 32 of the space 34 that is delimited between the rollers. The rollers 2 and 3 are of identical construction as transport roller, whilst roller 4 is of somewhat different construction and acts as a cutting roller. Details can be seen from Fig. 5. Only the rollers 3 and 4 have been drawn in this figure. Roller 3 has a run-in end 37 of relatively small diameter followed by an engagement end 38 by means of which engagement and transport of the strand takes place, followed by the processing part 39. According to an advantageous embodiment, the length of part 37 is approximately one third the length of part 39. Core 40 of roller 4, on the other hand, has a size that gradually increases from the inlet end to the outlet end such that cutting takes place close to the end.

When a strand is introduced from the top in Fig. 1 the cross-sectional area of the space delimited by the three rollers 2 - 4 is such that the strand can be received therein with linear contact. As the strand moves downwards the space becomes ever smaller. As a result, the strand, the outer periphery of which is essentially cylindrical, will gradually be deformed in accordance with the shape of the grooves delimited by the ribs. In the case of a core and an outer skin surrounding the latter, the outer skin will slowly be pressed inwards. At the time of cutting complete closure is achieved with the outer skin, so that the core is not exposed to the environment. As a result of the rollers coming ever closer together, finally separation into a number of pieces 26 will take place. To perform this operation it is important that the core is accurately guided through the rollers and deformed over a prolonged period. For this purpose the screw ribs must make at least three complete revolutions and more preferentially at least ten complete revolutions around the rollers.

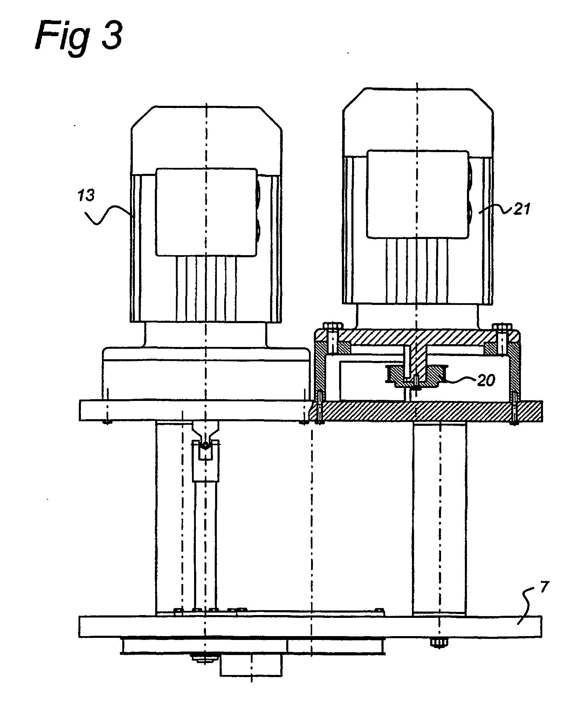

Details of the device according to the present invention can be seen in Figures 2-4. There is a frame 7 in which the two support plates 5 and 6 located opposite one another are accommodated with the aid of bearings such that they can rotate. The support plates 5 are each provided with three bearings for accommodating the rollers 2-4 therein such that they can rotate. The rollers 2 - 4 are each provided with an extension or drive shaft 15 terminating in a gearwheel 16. The three gearwheels engage with a gearwheel 17 that is rigidly joined to a drum 18 that is provided near its lower end with a pulley 19 that can be driven by means of a belt by pulley 20 of motor 21 (see Figs. 2 and 3).

Support plate 5 is provided with a pulley 9 that is driven by pulley 11 of motor 13. Motor 13 is furthermore provided with a drive shaft 12 on which a pulley 10 is fitted. The angle of pulley 10 with respect to drive shaft 12 can be adjusted by means of an adjustment device 14 that is indicated diagrammatically only. Pulley 10 drives pulley 8 which, in turn, is connected to drive plate 5. It is possible to adjust the angle of support plate 5 with respect to support plate 6 by means of the adjustment device 14.

At the top the device is provided with a stationary, non-rotary inlet tube 24 that has a diameter that is a little larger than the diameter of the strand 25 to be introduced. This inlet tube serves to guide the strand past the drive components in the space 34.

The rotary motors 13 and 21 and the associated transmission ratio to the rollers and support plates, respectively, are so chosen that when strand 25 is stationary the surface of the rollers 2 - 4 engaging on the strand makes a rolling-away movement on average over the height thereof, that is to say a rotary force that could lead to torsion of the stand is not exerted on the strand. As a result the strand is pulled downwards with a small force by the presence of the ribs 28 - 30 and, as the space becomes smaller, constriction takes place at a regular interval (determined by the pitch of the ribs 28 - 30). That is to say, the strand is gradually compressed at a number of locations located some distance apart and finally complete separation of the piece formed and the strand will take place close to the end of the roller 4, as a result of which the product 26 will drop out of the device and be discharged in a suitable manner to, for example, a cooling device that is not shown.

By means of the present invention it is possible to process very soft strands of material, products being produced that always have precisely the same size, which is of great importance for subsequent processing thereof, for example packing. By means of the present invention it is possible to produce products continuously, which products may or may not consist of an outer layer/fill. The shape of the final product can be determined depending on the pitch and the shape of the ribs with respect to the core of the rollers 2 - 4. Thus, it is possible to produce both spherical products and more elongated products. The various aspects are also dependent on the angle (α) between the rollers.

It has been found that with a diameter of approximately 2 cm the accuracy of each of the successive products is within a few hundredths of a millimetre.

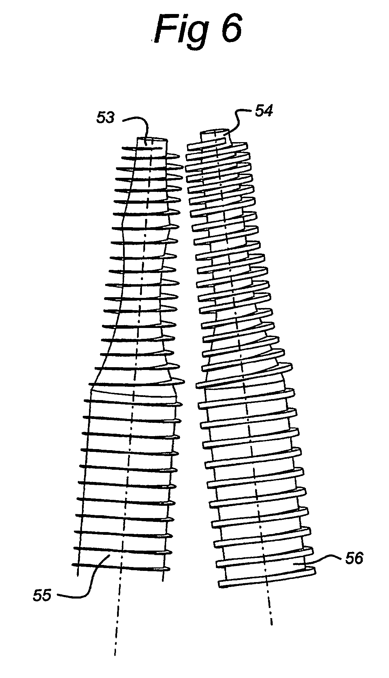

A further variant of the present invention is shown highly diagrammatically in Fig. 6. As in Fig. 5, only two rollers are shown, indicated by 53 and 54. These are shaped correspondingly to those in Fig. 5, but, of course, can have any other shape.

However, differing from what has been shown above, the rollers are provided with an extension, indicated by 55 and 56, respectively. In the extended section the core diameter of the rollers is essentially constant and the same applies in respect of the extent to which the screw ribs protrude.

By means of such a set-up more space is created for bearings for the rollers and for dispensing the products formed.

After reading the above, variants that are obvious will be immediately apparent to those skilled in the art. For instance, it is possible to use more than three rollers. It is also possible to combine the drive of the support plates and the rollers. It is also possible actively to drive only one support plate. These and further variants fall within the scope of the appended claims.

## Claims

1. Device (1) for forming a strand (25) into individual pieces (26) comprising three rollers (2 - 4), provided with a screw rib (28, 30), which between them delimit a space for accommodating said strand and forming said pieces, wherein the cross-sectional area of said space is larger at the input end for said strand than the cross-sectional area of said space at the output end for said strand pieces, wherein one of said screw ribs (30) is constructed as cutting rib and said rollers are provided with a rotary drive (13), wherein said space and said rollers each have a longitudinal axis (32, 33) and wherein the longitudinal axis of each of said rollers (33) makes an angle with respect to the longitudinal axis (32) of said space, such that an arc α of 60 - 90° with respect to the central longitudinal axis (32) is spanned.

2. Device according to Claim 1, wherein said three rollers are accommodated on either side in a support (5, 6) and said support is mounted such that it can turn for rotating said rollers around said space.

3. Device according to Claim 1 or 2, wherein said screw rib comprises at least three complete revolutions around said roller.

4. Device according to one of the preceding claims, wherein the fixings for said rollers in the supports are offset with respect to the longitudinal axis of said space.

5. Device according to one of the preceding claims in combination with Claim 2, comprising a common drive for said rollers and supports.

6. Device according to one of the preceding claims, wherein a stationary guide (24) for the strand is arranged at the input end for said strand.

7. Device according to one of the preceding claims, wherein the shape of the core of said rollers comprises a hyperboloid.

8. Device according to one of the preceding claims, wherein said screw rib is provided with knurling.

9. Method for forming a strand of material into individual pieces, comprising feeding said strand essentially vertically into a space delimited by three rotating rollers provided with a screw rib, wherein the cross-sectional area of said space delimited by said rollers becomes increasingly smaller and said strand being slowly converted into products having a shape corresponding to the shape of the screw ribs and separating said strand/products into pieces by cutting said strand using the screw rib of at least one of said rollers.

10. Method according to Claim 9, wherein said strand comprises a core part and a covering surrounding the core part.

11. Method according to Claim 10, wherein said core part comprises material that is at least partially liquid.

12. Method according to one of Claims 9 -11, wherein said pieces comprise spherical objects.

13. Method according to one of Claims 9 - 12, wherein, after separating from said strand, said pieces are cooled.

14. Method according to one of Claims 9 - 13, wherein said rotary rollers also rotate about the axis of said space and wherein the speed of rotation and direction thereof with respect to the speed of rotation and direction of the surface of said rollers engaging on said strand is such that said surface of engagement executes a rolling-away movement along the stationary strand.

## Revendications

1. Dispositif (1) destiné à former un boudin (25) en pièces individuelles (26) comportant trois rouleaux (2 à 4), pourvus d'une nervure de vis (28, 30), qui délimitent entre eux un espace destiné à recevoir ledit boudin et à former lesdites pièces, la section dudit espace étant plus grande au niveau de l'extrémité d'entrée pour ledit boudin que la section dudit espace au niveau de l'extrémité de sortie pour lesdites pièces de boudin, une desdites nervures de vis (30) étant construite sous la forme d'une nervure de coupe et lesdits rouleaux étant pourvus d'un entraînement en rotation (13), ledit espace et lesdits rouleaux ayant chacun un axe longitudinal (32, 33) et l'axe longitudinal de chacun desdits rouleaux (33) faisant un angle par rapport à l'axe longitudinal (32) dudit espace, de telle sorte que s'étend un arc α de 60 à 90° par rapport à l'axe longitudinal central (32).

2. Dispositif selon la revendication 1, dans lequel lesdits trois rouleaux sont reçus de chaque côté dans un support (5, 6) et ledit support est monté de telle sorte qu'il peut tourner pour la rotation desdits rouleaux autour dudit espace.

3. Dispositif selon la revendication 1 ou 2, dans lequel ladite nervure de vis comprend au moins trois révolutions complètes autour dudit rouleau.

4. Dispositif selon l'une des revendications précédentes, dans lequel les fixations pour lesdits rouleaux dans les supports sont décalées par rapport à l'axe longitudinal dudit espace.

5. Dispositif selon l'une des revendications précédentes en combinaison avec la revendication 2, comportant un entraînement commun pour lesdits rouleaux et supports.

6. Dispositif selon l'une des revendications précédentes, dans lequel un guide fixe (24) pour le boudin est disposé au niveau de l'extrémité d'entrée pour ledit boudin.

7. Dispositif selon l'une des revendications précédentes, dans lequel la forme de l'âme desdits rouleaux comprend un hyperboloïde.

8. Dispositif selon l'une des revendications précédentes, dans lequel ladite nervure de vis est pourvue d'un moletage.

9. Procédé de formation d'un boudin de matière en pièces individuelles, comportant le fait de délivrer ledit boudin de manière sensiblement verticale dans un espace délimité par trois rouleaux en rotation pourvus d'une nervure de vis, la section dudit espace délimité par lesdits rouleaux devenant de plus en plus petite et ledit boudin étant progressivement converti en produits ayant une forme correspondant à la forme des nervures de vis, et de séparer ledit boudin/lesdits produits en pièces en découpant ledit boudin en utilisant la nervure de vis d'au moins un desdits rouleaux.

10. Procédé selon la revendication 9, dans lequel ledit boudin comprend une partie centrale et un revêtement qui entoure la partie centrale.

11. Procédé selon la revendication 10, dans lequel ladite partie centrale comprend de la matière qui est au moins partiellement liquide.

12. Procédé selon l'une des revendications 9 à 11, dans lequel lesdites pièces comportent des objets sphériques.

13. Procédé selon l'une des revendications 9 à 12, dans lequel, après séparation dudit boudin, lesdites pièces sont refroidies.

14. Procédé selon l'une des revendications 9 à 13, dans lequel lesdits rouleaux rotatifs tournent également autour de l'axe dudit espace et dans lequel la vitesse de rotation et le sens de celle-ci par rapport à la vitesse de rotation et au sens de la surface desdits rouleaux qui engagent ledit boudin sont tels que ladite surface d'engagement exécute un mouvement de roulement avec éloignement le long du boudin fixe.

## Patentansprüche

1. Vorrichtung (1) zum Formen eines Strangs (25) in einzelne Stücke (26) mit drei mit einer Schraubenrippe (28, 30) versehenen Rollen (2-4), die zwischen sich einen Raum zum Aufnehmen des Strangs und Formen der Stücke begrenzen, wobei der Querschnittsbereich des Raumes am Eingangsende für den Strang größer ist als der Querschnittsbereich des Raumes am Ausgangsende für die Strangstücke, wobei eine der Schraubenrippen (30) als Schneidrippe (13) ausgebildet ist und die Rollen mit einem Drehantrieb versehen sind, wobei der Raum und die Rollen jeweils eine longitudinale Achse (32, 33) aufweisen und wobei die longitudinale Achse jeder der Rollen (33) einen Winkel relativ zur longitudinalen Achse (32) des Raumes einschließt, so dass ein Winkel α von 60° bis 90° relativ zu der zentralen longitudinalen Achse (32) aufgespannt ist.

2. Vorrichtung nach Anspruch 1, wobei die drei Rollen an jeder Seite in einem Träger (5, 6) aufgenommen sind und der Träger so montiert ist, dass er zum Drehen der Rollen um den Raum drehen kann.

3. Vorrichtung nach Anspruch 1 oder 2, wobei die Schraubenrippe zumindest drei vollständige Umläufe um die Rolle umfasst.

4. Vorrichtung nach einem der vorstehenden Ansprüche, wobei die Befestigungen für die Rollen in dem Träger relativ zur longitudinalen Achse des Raumes versetzt sind.

5. Vorrichtung nach einem der vorstehenden Ansprüche in Kombination mit Anspruch 2, der einen gemeinsamen Antrieb für die Rollen und die Träger umfasst.

6. Vorrichtung nach einem der vorstehenden Ansprüche, wobei eine stationäre Führung (24) für den Strang am Eingangsende für den Strang angeordnet ist.

7. Vorrichtung nach einem der vorstehenden Ansprüche, wobei die Form des Kerns der Rollen einen Hyperboloid umfasst.

8. Vorrichtung nach einem der vorstehenden Ansprüche, wobei die Schraubenrippe mit einer Rändelung versehen ist.

9. Verfahren zum Formen eines Materialstrangs in einzelne Stücke, mit Zuführen des Strangs im Wesentlichen vertikal in einen Raum, der durch drei rotierende, mit einer Schraubenrippe versehene Rollen begrenzt ist, wobei der Querschnittsbereich des von den Rollen begrenzten Raums abnehmend kleiner wird und der Strang langsam in Produkte mit einer Form entsprechend der Form der Schraubenrippen umgewandelt wird, und Trennen des Strangs/der Produkte in Stücke durch Schneiden des Strangs unter Verwendung der Schraubenrippe von zumindest einer der Rollen.

10. Verfahren nach Anspruch 9, wobei der Strang einen Kern und einen den Kern umgebenden Mantel umfasst.

11. Verfahren nach Anspruch 10, wobei der Kern ein Material umfasst, das zumindest teilweise flüssig ist.

12. Verfahren nach einem der Ansprüche 9 bis 11, wobei die Stücke sphärische Objekte umfassen.

13. Verfahren nach einem der Ansprüche 9 bis 12, wobei die Stücke nach der Trennung vom Strang gekühlt werden.

14. Verfahren nach einem der Ansprüche 9 bis 13, wobei die drehenden Rollen auch um die Achse des Raumes drehen und wobei die Geschwindigkeit von Rotation und deren Richtung relativ zu der Geschwindigkeit der Rotation und der Richtung der Oberfläche der Rollen, die auf den Strang einwirken, so ist, dass die Eingriffsoberfläche eine Wegrollbewegung entlang des stationären Strangs ausführt.
